# EUROPEAN PATENT SPECIFICATION

(11) **EP 3 986 711 B1**
(45) Date of publication and mention of the grant of the patent: **07.08.2024**
(21) Application number: 19935534.8
(22) Date of filing: 24.06.2019
(51) Int. Cl.: B32B 5/02, B32B 7/10, B32B 7/12, B32B 7/06, B32B 27/08, B32B 27/30, B32B 27/32, B32B 27/34, B32B 27/36, B32B 7/035

(54) **RECYCLABLE FILM AND PACKAGING**
RECYCLINGFÄHIGE FOLIE UND VERPACKUNG
FILM RECYCLABLE ET EMBALLAGE

(43) Date of publication of application: 27.04.2022
(73) Proprietor: Amcor Flexibles North America, Inc., Neenah, WI 54956 (US)
(72) Inventor: BERBERT, Otacilio, T., Neenah, WI 54956 (US); TIAN, Zheng, Neenah, WI 54956 (US)
(74) Representative: Vossius & Partner Patentanwälte Rechtsanwälte mbB
(86) International application number: PCT/US2019/038749
(87) International publication number: WO 2020/263219

(56) References cited:
- WO-A1-2018/231219
- WO-A1-2019/083675
- WO-A1-2019/083675
- US-A- 5 622 780

## Description

### TECHNICAL FIELD

This application relates to films that can be easily recycled. More specifically, high performance packaging films that can be recycled in polyolefin recycling streams are disclosed.

### BACKGROUND

Today, many products such as consumer goods, foods, beverages, pharmaceuticals, industrial chemicals, cleaners, cosmetics and other products are packaged in high performance packaging. This packaging provides advantages such as high barrier and hermetic seals to help protect and extend the shelf life of the packaged product through distribution and product use. The packaging may also include features for consumer ease, such as opening or reclosing features. Materials used to manufacture these packages must endure the package formation process, package filling conditions and environmental stresses from storage, shipping and distribution. These demands are generally met by multilayer packaging that incorporates several different high-performance materials.

In many cases, high performance packaging is designed with exterior layers such as OPET (biaxially oriented polyethylene terephthalate) or BON (biaxially oriented nylon) which provide high stiffness, dimensional stability and heat resistance. High performance packaging also may include barrier materials such as aluminum foil, PVdC (polyvinylidene chloride) or EVOH (ethylene vinyl alcohol copolymer). These materials are added to a film structure that also includes polymers specific for sealing, polymers designed to bind the structure together, printing inks, and adhesives, to name a few. The combination of these various materials creates a film that is very difficult to recycle in available recycling streams due to the dissimilarity of the many materials in the film. As a result, these packaging films are typically considered "waste" after the package has been emptied.

Single material structures, such as all-polyethylene type structures, have been developed for some packaging applications to ease recyclability. Processing techniques, such as orientation have been utilized to increase the technical performance and functionality of these materials. However, these films and packages continue to suffer in performance as compared to non-recyclable films and packages. Often, al I-polyethylene packages have poor appearance due to lack of heat resistance and low durability. These types of structures also have inefficiencies in film conversion, thus driving the cost to manufacture higher.

One solution to the multi-material films is to add compatibilizers at the point of recycling. Compatibilizers can help incorporate the otherwise incompatible materials into a usable material. The challenge to this solution is that it is very difficult to determine which type of compatibilizers should be added and how much. Recyclers need to resort to using multiple compatibilizers at high rates, making this solution inefficient and unpredictable.

Alternatively, it has been suggested that compatibilizers should be added to various layers of the packaging film to assist with the incorporation of multiple materials into a single material recycling stream. This allows for precise and efficient compatibilization. However, the film structures containing compatibilizers continue to lack the properties to match the non-recyclable high-performance packaging materials that are sold today,
WO 2019/083675 A1 discloses high performance packaging films that can be recycled in a polyethylene recycling stream.
WO 2018/231219 A1 discloses a multilayer flexible film for packaging a transdermal patch product comprising a pharmaceutical active agent.

### SUMMARY

High performance flexible packaging is designed to deliver speed, performance and cost efficiency in both the process to manufacture the packaging material and the process to manufacture a finished packaged product. High performance packaging provides protection to the product(s) inside while maintaining an impressive appearance. Typically, high performance packaging materials are designed with a combination of materials to achieve these requirements. Unfortunately, this combination of materials often makes the packaging material difficult or impossible to recycle into a standard reprocessing or recycling stream. Described herein is a recyclable film having properties such that the film can be used for high performance packaging applications, without the disadvantages often experienced with currently available recyclable film. The films disclosed herein provide recyclable and high-performance options that 1) can be efficiently converted, 2) have a comparable cost to current films, 3) can be used on existing packaging equipment, 4) have acceptable appearance and/or 5) can be efficiently recycled into a polyolefin-based recycling stream.

The present invention relates to a recyclable film according to any one of claims 1 to 13 and a package according to claim 14.

Some embodiments of the recyclable film have a base film and a sealing layer. The base film has i) a first layer comprising a polyester, and ii) a second layer comprising a polyester compatibilizer. The sealing layer is connected to the base film and located on an exterior surface of the recyclable film.
The base film is oriented, and the sealing layer is not oriented.

In some embodiments of the recyclable film the polyester compatibilizer is a polyolefin polymer. The polyester compatibilizer may be one selected from the group of ethylene methyl acrylate copolymer (EMA), ethylene methacrylic acid copolymer (EMAA), ethylene acrylic acid copolymer (EAA), ethylene butyl acrylate copolymer (EBA), ethylene glycidyl methacrylate copolymer (E/GMA), EMAA partially neutralized by a metal salt and EMA partially neutralized by a metal salt.

In some embodiments of the recyclable film the polyester is one selected from the group of polyethylene terephthalate (PET), polyethylene terephthalate glycol (PETG), polybutylene terephthalate (PBT), polyethylene naphthalate (PEN), polyethylene isophthalate (PEI), polycycloterephthalate (PCT), and polytriethylene terephthalate (PTT).

The recyclable film is recyclable into a polyethylene-based stream or a polypropylene-based stream.

In some embodiments of the recyclable film the first layer of the base film is an exterior layer of the base film. The base film has a free shrink value of less than 10% in both the machine direction and the transverse direction when tested according to ASTM D2732 using bath temperature of 90°C.

Some embodiments of the recyclable film have a base film with i) a first layer containing a polyester, ii) a second layer containing a polyester compatibilizer, and iii) a third layer containing a polyester. The second layer is located between the first layer and the third layer. The recyclable film also contains a sealing layer connected to the base film. The base film is oriented and has a free shrink value of less than 10% in both the machine direction and the transverse direction when tested according to ASTM D2732 using bath temperature of 90°C. The first layer may be a first exterior layer of the base film and the third layer may be a second exterior layer of the base film and the recyclable film may further have printed indicia located on the second exterior layer of the base film. The base film may form a first exterior surface of the recyclable film and the sealing layer may form a second exterior surface of the recyclable film. The sealing layer may be part of a non-oriented multilayer film that also has a barrier layer containing an ethylene vinyl alcohol copolymer.

Some embodiments of the recyclable film have a base film with i) a first layer containing a polyester, ii) a second layer containing a polyester compatibilizer, and iii) a third layer containing a polyester, the second layer is located between the first layer and the third layer, and the base film is oriented. The recyclable film may also have a sealing layer located on an exterior surface of the recyclable film. The recyclable film may have a barrier material located between the base film and the sealing layer. The base film may contain a bonding agent layer.

A package contains any of the embodiments of the recyclable film and may also contain another packaging component. The recyclable film may be heat sealed to either itself or the additional packaging component and the heat seal strength may be between 200 g/in and 2,500 g/in when tested according to ASTM F88. The recyclable film may be configured to be separated from the additional packaging component that may be present. The package may contain a product and the package may be configured to be opened for complete product removal.

### BRIEF DESCRIPTION OF THE DRAWINGS

The disclosure may be more completely understood in consideration of the following detailed description of various embodiments of the disclosure in connection with the accompanying drawings, in which:
**Figure 1** is a cross-sectional view of a first embodiment of a recyclable film;
**Figures 2a, 2b and 2c** are cross-sectional views of embodiments of a base film for a recyclable film;
**Figure 3** is a cross-sectional view of a second embodiment of a recyclable film;
**Figure 4** is a cross-sectional view of a third embodiment of a recyclable film;
**Figures 5a** and **5b** are schematic views of embodiments of a package that comprises a recyclable film; and
**Figure 6** is a schematic view of an embodiment of a package that comprises a recyclable film.

The drawings show some but not all embodiments. The elements depicted in the drawings are illustrative and not necessarily to scale, and the same (or similar) reference numbers denote the same (or similar) features throughout the drawings.

### DETAILED DESCRIPTION

In recent years, packaging materials have been developed with recycling in mind. However, these materials often fall short of delivering the standard requirements of product protection, good appearance and low cost. The recyclable films described herein use an oriented and annealed film that combines polyester and polyester compatibilizers as a base film. When combined with a sealing layer, a high-performance packaging film that meets both recycling and performance criteria may be achieved. The packages described herein are made with recyclable films that are designed to have high barrier, excellent appearance (clarity), good heat resistance (low shrink), high quality graphics, and/or good durability. The recyclable films described herein have superior performance to recyclable films available in the market today.

The recyclable films, as well as packages and/or containers including such films, preferably have seal strength, thermal stability, and heat resistance properties that allow them to be subjected to heat sealing conditions without loss of desired functional and high-quality visual characteristics. Recyclable films that contain multilayer base films that include polyester and are oriented and annealed show superior properties of heat resistance, appearance and overall performance as compared to polyolefin-based recyclable films. The inclusion of an oriented polyester layer at or near the external surface of the recyclable film, yet still enable the film to be recycled in the same process and with the same simplicity as all-polyolefin structures is an important advantage of the recyclable films disclosed herein.

By incorporating an exterior that is an oriented base film containing polyester, the recyclable films disclosed herein have "runnability" that is identical to, or nearly identical to, non-recyclable films that use oriented monolayer polyester films (commonly referred to as oriented polyester or OPET) with respect to package formation. In other words, when run on a packaging line that forms a package by mechanical and thermal manipulation, the recyclable films that use a multilayer base film containing a polyester layer, the speed of the packaging line and the quality of the packages is not diminished as compared to non-recyclable high-performance packaging films.

Advantageously, the base film of the recyclable films contains a polyester layer and a polyester compatibilizer layer, in close proximity to each other (i.e. within the same film), such that typical recycling processes will readily recycle the film without extended processing time or additional compatibilizer. The recyclable films are "ready-to-recycle" in a polyolefin-based recycling stream. The recyclable films can be designed with an optimal amount of compatibilizer (matched to the amount of polyester) such that extra compatibilizer is not wasted and there is no risk of recycle process issues that may occur if there is not enough compatibilizer.

The recyclable films described herein may be recycled after their primary use is completed. In general, the term recyclable means that the product is suitable for reuse. An example of one specific context of recyclable is reusing a plastic grocery bag a second time to contain some other items. The plastic bag has been reused and recycled. In a slightly different context, recyclable means that the product is suitable for reuse after being converted into a new product. As used herein, the term "recyclable" is meant to indicate that the film can be converted into a new useful item, by means of reprocessing in a polyolefin recycle stream (i.e. recycling streams based on polyethylene or polypropylene). Reprocessing may entail washing, separating, melting and forming, among many other steps. Typically, when plastic packaging is recycled by reprocessing, the material is mechanically chopped into small pieces, melted, mixed and reformed into the new product. If multiple incompatible materials are present in the packaging, interactions occur during reprocessing causing gels, brittle material, poor appearance and generally un-usable or poor-quality products. Using the term "recyclable" indicates that these drawbacks are generally not present. Qualification as a recyclable material is not regulated by any specific agencies but can be obtained from specific groups such as Association of Plastic Recyclers (APR) and How2Recycle^{™}. Recyclable films disclosed herein may be suitable for "Store Drop-off" recycling streams. These streams may accept the following: 100% polyethylene bags, wraps, and films; very close to 100% polyethylene bags, wraps, and films; and How2Recycle-approved polyethylene-based carrier packing, with or without compatibilizer technology. Introduction of a recyclable film into any of these recycling-by-reprocessing avenues should not require additional compatibilizer.

The recyclable films described herein are recyclable into a polyethylene-based stream or a polypropylene-based stream.

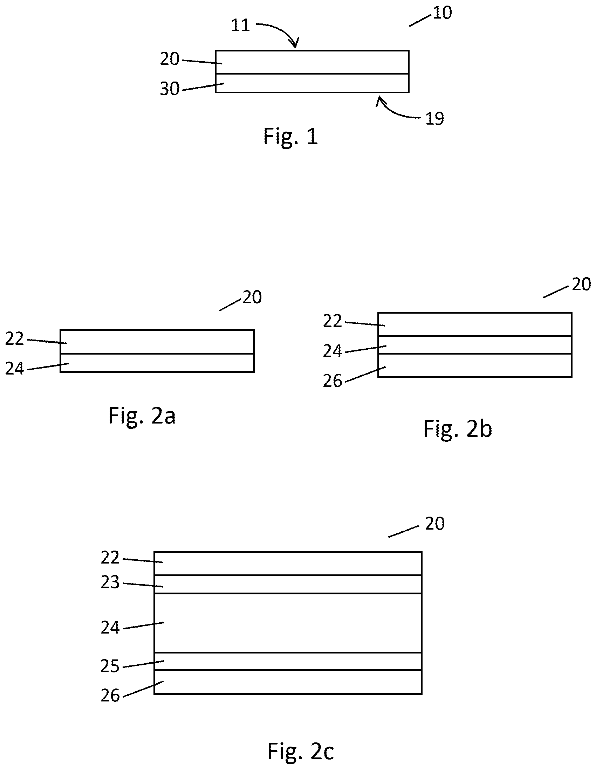

As shown in Figure 1, the recyclable films **10** described herein use a base film **20**, located on the first exterior surface **11** of the recyclable film **10**, the base film having a combination of various layers, including but not limited to, a polyester layer and a polyester compatibilizer layer. The base film **20** is oriented and annealed. The materials in the base film and the processing techniques to manufacture the base film combine to create a cost effective and high-performance film with good heat resistance, low shrink, and dimensional stability. The embodiment of the recyclable film shown in Figure 1 also includes a sealing layer **30** located on the second exterior surface **19** of the recyclable film **10**. The sealing layer **30** is connected to the base film **20**. Preferably, the sealing layer **30** is not oriented.

The term "layer", as used herein, refers to a building block of films that is a structure of a single material type or a homogeneous blend of materials. Films contain one or more layers. A layer may be a single polymer, a blend of materials within a single polymer type or a blend of various polymer types, may contain metallic materials and may have additives. Layers may be continuous with the film or may be discontinuous or patterned.

The base film contains at least one polyester layer that contains at least one polyester. As used herein, the term "polyester" refers to a synthetic homopolymer or copolymer having ester linkages between monomer units. Suitable polyesters for the base film may be chosen among aliphatic polyesters or semi-aromatic polyesters obtained by polycondensation of one or more suitable dicarboxylic acids and one or more suitable diols, or of one or more hydroxylated carboxylic acids. Suitable dicarboxylic acids constituting the polyester may include terephthalic acid, isophthalic acid, phthalic acid, 5-tert-butylisophthalic acid, naphthalene dicarboxylic acid, diphenyl ether dicarboxylic acid, cyclohexane-dicarboxylic acid, adipic acid, oxalic acid, malonic acid, succinic acid, agelaic acid, sebacic acid, and dimer acids comprising dimers of unsaturated fatty acids, which may be used singly or in combination of two or more species. Suitable diols constituting the polyester may include ethylene glycol, propylene glycol, tetramethylene glycol, neopentyl glycol, hexamethylene glycol, diethylene glycol, polyalkylene glycol, 1,4-cyclohexane-dimethanol, 1,4-buanediol, and 2-alkyl-1,3-propane diol which may be used singly or in combination of two or more species. Preferred polyesters for the polyester layer include polyethylene terephthalate (PET), polyethylene terephthalate glycol (PETG), polybutylene terephthalate (PBT), polyethylene naphthalate (PEN), polyethylene isophthalate (PEI), polycycloterephthalate (PCT), and polytriethylene terephthalate (PTT). Commercial examples of suitable polyesters include Eastapak^{™} Polyester 9921, Eastar^{™} Copolyester 6763, Tritan^{™} Copolyester FX100, and Eastobond^{™} Copolyester 19412, all available from Eastman Chemical Company, Kingsport, Tennessee, Laser+^{®} C9921 available from DAK Americas, and Polyclear^{™} Crystal^{™} PET 3302.

In addition to the polyester, the polyester layer may contain other materials such as other polymers or additives, such as slip or antiblock materials. Preferably, the polyester layer is made of at least 50% polyester, or more preferably more than 70%, more than 80%, more than 90% or more than 95% polyester.

In some embodiments of the recyclable film, the base film has at least two polyester layers. The base film could have one, two or more polyester layers. The polyester layers may be separated by polyester compatibilizer layers, tie layers or other layers, as will be described. In the case where the base film does contain more than one polyester layer, the polyester layers may have the same composition or different composition. For instance, the base film may have one polyester layer that contains PET and a second polyester layer that contains PETG. In some embodiments, the base film contains two polyester layers, each containing PET.

By nature of their chemical makeup, many polyester polymers typically used for the production of films have generally different properties as compared to polyolefin polymers. Polyesters can provide better clarity, increased stiffness or increased heat resistance. Thus, the use of a polyester material in a recyclable film can improve the properties of the film and a package that may use the recyclable film. Additionally, these properties may be enhanced upon orientation, as will be discussed below.

A base film containing two layers of polyester separated by a polyester compatibilizer layer and machine direction oriented and annealed, can be used to manufacture a recyclable packaging film that has similar machineability and packaging line efficiency as the current non-recyclable packaging structures that use monolayer OPET. The addition of the polyester compatibilizer layer surprisingly does not negatively affect the performance of the oriented base film. Advantageously, the addition of a polyester compatibilizer to the layer that separates the two polyester layers adds the functionality of recyclability to the film, creating a significant advantage, without compromising the physical properties of the film.

Advantageously, one or both exterior layers of the base film may be polyester layers. Reference to "exterior layer" as used herein refers to the layers of a film that are on either major exterior surface of the film, i.e. the layers that are not between two other layers of that film. In some embodiments, both exterior layers of the base film are polyester layers.

In some embodiments, the exterior layer of the base film is also the exterior layer of the recyclable film (i.e. the layer comprising the first exterior surface **11**). In other words, the base film is an exterior film of the recyclable film and no other films or layers are applied to the exterior layer of the base film. In some embodiments, the exterior layer of the base film is the exterior layer of the recyclable film and comprises a polyester.

The polyester layer(s) may be of any thickness. Typically, a polyester layer represents at least 2% of the total base film thickness before orientation. The polyester layers may represent between about 5% and about 8% of the total base film thickness. The polyester layers may represent between about 5% and about 15% of the total base film thickness. The polyester layers may comprise about 20% of the base film. Both exterior layers of the base film may comprise polyester, each with a thickness of about 10% of the base film.

The polyester compatibilizer layer of the base film contains materials, "compatibilizers", that can assist in the incorporation of polyester materials of the polyester layer into a reprocessing or recycling stream of polyolefin polymers. The compatibilizer generally increases the stability of the dispersed polyester material by providing sites that allow the two materials (polyester and polyolefin) to interact, increasing miscibility. Use of a compatibilizer in a blend of polyester and polyolefin materials generally creates a more homogeneous blend, avoiding gels and other issues that cause visual or mechanical property quality issues. Compatibilizer materials are especially useful in recycling-by-reprocessing type processes.

The polyester compatibilizer may be a polyolefin polymer. A polyolefin polymer is produced using a simple olefin (i.e. an alkene with the formula C₂H₂ₙ) as a monomer, such as polyethylene (ethylene monomer) homopolymers and copolymers or polypropylene (propylene monomer) homopolymers or copolymers. Preferably, the polyester compatibilizer is a polyethylene copolymer.

In some embodiments of the base film, the polyester compatibilizer layer contains an acrylate containing copolymer or terpolymer. Examples of acrylate containing polymers are ethylene methyl acrylate copolymer (EMA), ethylene methacrylic acid copolymer (EMAA), ethylene acrylic acid copolymer (EAA), ethylene butyl acrylate copolymer (EBA), ethylene glycidyl methacrylate copolymer (E/GMA), EMAA partially neutralized by a metal salt and EMA partially neutralized by a metal salt. The acrylate polymers that are partially neutralized by a metal salt are commonly referred to as ionomers. Examples of materials suitable for the polyester compatibilizer layer are DuPont Nucrel^{®} 0903HC EMAA, DuPont Surlyn^{™} 1652 Zn neutralized ionomer and DuPont Elvaloy^{™} AC 1820 EMA.

The amount of polyester compatibilizer needed is dependent upon many variables including the amount of polyester, the type of polyester, and the type of compatibilizer.
The mass ratio of polyester compatibilizer to polyester is from about 1:6 to about 1:1.

The appropriate amount of polyester compatibilizer can be determined by simple testing for compatibilization results. With reasonable trial and error, the minimum or optimum amount of compatibilizer can be determined by using a recycling protocol such as the one outlined in the Examples of this disclosure. For example, various blend ratios of polyester and polyester compatibilizer can be fed into a standard recycling process while the extrusion back pressure is monitored for excessive levels. Alternatively, the test blends can be reprocessed into a melt blend and then extruded into a film or sheet. Here, excessive defects such as gels, streaks or holes can help determine an effective compatibilizer level.

The base film also may have one or more layers for the functionality of adhesion, such as tie layers or adhesive layers. The term "tie layer," "adhesive", "adhesive layer," or "bonding agent layer," refers to a material or layer placed between two other materials or layers, partially or entirely, to promote the adhesion of the materials. A "tie layer" refers to a polymeric-based material that is coextruded with other layers for the purpose of providing adhesion between two other layers. In the base film of the recyclable film, a tie layer may be positioned between the polyester layer and the polyester compatibilizer layer. Tie layers may also be used to provide adhesion for any other layers that may be present in the base film. The tie layers may also contain materials for other functionality such as moisture barrier. In some embodiments, the tie layer(s) in the base film contains an ethylene-based polymer that has been grafted with maleic anhydride functional groups.

The base film of the recyclable film may contain other functional layers, such as bulk layers, pigmented layers, or barrier layers, as long as the content of these layers does not frustrate the recyclability of the overall film. Layers of the base film may contain recycled content such as post-consumer recyclate or post-industrial recyclate. Specifically, a layer of the base film may contain reprocessed scrap, such as edge trim, from the production of the base film or recyclable film itself (i.e. closed loop industrial recycling).

Non-restricting embodiments of the base film are shown in Figures 2a, 2b and 2c. In Figure 2a, the base film **20** has a first layer **22** containing polyester and a second layer **24** containing a polyester compatibilizer. In this embodiment, the first layer **22** is directly adjacent to the second layer **24**, but other embodiments may include intervening layers. Additionally, the first layer **22** and the second layer **24** are each shown as exterior layers of the base film. In other embodiments, the first and/or the second layer are not exterior layers.

Figure 2b shows an embodiment of the base film **20** that includes two polyester layers. The first layer **22** contains polyester and is shown as a first exterior layer of the base film. The third layer **26** also contains polyester and is shown as a second exterior layer of the base film. The second layer **24** contains a polyester compatibilizer and is shown in the preferred location, between the first and third layers. As discussed previously, the first and third layers may have the same or different composition.

Figure 2c shows an embodiment of the base film **20** that includes a first tie layer **23** between the first layer **22** and the second layer **24**, and a second tie layer **25** between the third layer **26** and the second layer **24**. The composition of the first and third layers may be the same or different. The composition of the first and second tie layers may be the same or different. In some embodiments, the composition of the first layer and the third layer are identical, the composition of the first tie layer and the second tie layer are identical, and the layer thickness are such that the base film is palindromic.

Figures 2a, 2b and 2c show the preferred embodiments of the base film having the first layer **22** as an exterior layer of the base film **20**. However, this is not restrictive and there may be other layers as the exterior layers of the base film **20** on either or both exterior layers.

As shown in Figures 2a, 2b and 2c, the polyester compatibilizer layer is in close proximity to the polyester layer(s). Incorporation of compatibilizer into the recyclable film structure allows for efficient use of the compatibilizer as the amount can be exactly matched to the amount of polyester polymer in the structure. Ideally, the compatibilizer layer should be within the same base film structure as the polyester layer. The compatibilizer layer should be close to the polyester layer, with ideally, only a tie layer (i.e. bonding agent layer) intervening between the two layers. This positioning allows the compatibilizer to be readily available to the polyester polymer at the time of recycling and reprocessing. When the compatibilizer is close to the polyester polymer, it is most efficiently used (i.e. the optimal minimum amount of compatibilizer is necessary). Locating the compatibilizer layer in close proximity to (near) the polyester polymer is a configuration of the base film such that the recyclable film may be recycled in a polyolefin recycling stream without the need for additional compatibilizer and with minimal mixing. Locating the compatibilizer layer between the polyester layers is an example of a configuration of the base film that allows the recyclable film to be recycled in a polyolefin recycling stream without the need for additional compatibilizer.

Advantageously, the polyester layers of the base film are spaced from each other by polyolefin-based layers, such as tie layers or compatibilizer layers. This type of structure increases the stiffness of the film compared to other film configurations with similar amounts of polyester and polyolefin, especially after orientation of the base film. An oriented and annealed base film of this type of structure (such as those shown as A/B/A of Figure 2b or A/C/B/C/A of Figure 2c structure) has stiffness that matches monolayer and/or mono-material oriented films typically used on "non-recyclable" high performance packaging, such as oriented polyester (OPET) or biaxially oriented nylon (BON). While retaining the stiffness as compared to OPET or BON, the embodiments of the base film of the recyclable films additionally have the advantage of recyclability in a polyolefin reprocessing stream.

The base film may be of any thickness. The base film may have a thickness from about 8 microns to about 25.4 microns or from about 8 microns to about 19 microns or from about 12 microns to about 19 microns.

Production of the base film may include the conversion processes of extrusion, orientation and annealing. These processes, in combination with raw material selection, can impart critical properties such as thermal stability and durability. Additionally, the film may be more cost effective than un-oriented materials or oriented materials made from polyester alone.

The layers of the base film can be extruded either in combination (coextrusion) or separately. If done separately, the layers can be combined by known methods of lamination including adhesive lamination or extrusion lamination. Alternatively, layers of the base film can be added by extrusion coating, solution coating, or any other known converting method. A combination of extrusion and lamination processes may be used to manufacture the base film. The base film, or any particular layers of the base film, may be extruded using either flat or annular die type processes.

In some embodiments of the base film, orientation of the film is performed after all the layers of the base film have been assembled. Orientation may be mono-directional (machine direction or transverse direction), or bi-directional stretching of the film, increasing the machine direction and/or transverse direction dimension and subsequently decreasing the thickness of the material. Bi-directional orientation may be imparted to the film simultaneously or successively. The film is subjected to stretching in either or both directions, in the solid phase at a temperature just below the melt temperature of the polymers in the film. In this manner, the stretching causes the polymer chains to "orient", changing the physical properties of the film. At the same time, the stretching thins the film. The resulting films are thinner and can have significant changes in mechanical properties such as toughness, heat resistance, stiffness, tear strength and barrier.

The amount of orientation imparted on the base film can affect the properties thereof. Stretching of at least 2X (2 times) may lead to optimal film properties, such as stiffness and appearance. However, in some embodiments the base film may be stretched to a level less than 2X. In other embodiments the base film may be machine direction stretched at least 2.5X, 3.0X, 3.5X, 4X, 5X, 6X, any value in between these, or more. In other words, the dimension of the film is increased 2 times the original length, increased 2.5 times the original length, etc. Biaxially oriented base films may be stretched at similar levels as mono-oriented films, through either a tenter-frame process (flat die) or a bubble process (tubular die).

Also important to the properties of the base film is the annealing process. After orientation, the films have an embedded stress. Upon heating film that has been oriented, this stress may be released, causing the films to shrink back to the original pre-orientation size. This lack of annealing may be problematic when applying heat to the base film during the process of heat sealing the recyclable film in a packaging application. An oriented and un-annealed base film may shrink upon exposure to a hot seal bar, resulting in a poor appearance in the heat seal area of the package. Additionally, a film that exhibits shrink under heat conditions will be very difficult to print (i.e. apply printed indicia), as the printing process generally uses high temperatures. The process of annealing can help alleviate the embedded stress caused by orientation and the film is "heat set" such that it will not shrink back to the original size at lower operating temperatures.

The base film may be oriented and annealed in line. The base film may be biaxially oriented and annealed in line using known processes. The base film may be coextruded on a flat die system with machine direction orientation and annealing in-line. The base film may be coextruded by a flat die system and subsequently machine direction stretched, transverse direction stretched (i.e. tenter frame orientation process) and annealed in-line. Alternatively, the processes of orientation and annealing may be done in separate processes. Annealing is typically accomplished in-line through high diameter rollers set up at temperatures a few degrees lower than the melting point of the polymer or blend of polymers present in the film. However, annealing can be done by any known means including hot air or IR heating.

The recyclable films disclosed herein may also include a sealing layer connected to the base film. As used herein, a "sealing layer" is a layer that contains a material that allows the recyclable film to be bonded to itself or other packaging components, forming a package. A sealing layer may form a bond under the influence of pressure or heat or a combination of these conditions. A sealing layer may be in the form of an extruded film layer or a coated layer and may be continuous or discontinuous (patterned). Alternatively, the sealing layer may be part of the base film. Embodiments of the recyclable film may include any known sealants such as, but not limited to, adhesives, hot melt, cold seal materials, heat seal films, and heat seal coatings.

As used herein "connected to" means that structure elements are configured such that they are associated with each other through either direct or indirect contact. For example, the sealing layer is connected to the base film either by being in direct contact with each other or by having intervening materials or layers simultaneously contacting both the sealing layer and the base film.

The sealing layer may be a material applied as a heat seal coating. Heat seal coatings are typically thin and may be pattern applied. Many different types of heat seal coatings can be used without hindering the recyclability of the film due to the small amount of sealing layer material required. Heat seal coatings may be, but are not limited to, polyester based formulas, vinyl/acrylic copolymer-based formulas, polyethylene-based formulas or polypropylene-based formulas. Heat seal coatings may contain low melt temperature components such as waxes. Heat seal coatings that contain wax components may have heat seal initiation temperatures of 60°C or even lower. A sealing layer on the recyclable film may have a heat seal initiation temperature that is less than 60°C, 85°C, 100°C or less than 121°C.

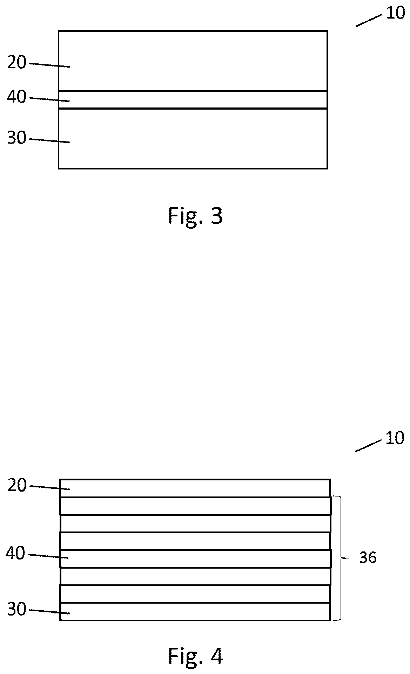

Heat seal coatings may be connected to the base film in any process known. The heat seal coating, or any other type of sealing layer, may be applied directly to the exterior layer of the base film. The heat seal coating may be applied directly to an exterior polyester layer of the base film. Alternatively, there may be intervening materials between the base film and the sealing layer, such as, but not limited to, printed indicia, barrier layers, primers or adhesives. Figure 3 shows an embodiment of the recyclable film **10** that has a base film **20** and a sealing layer **30**. Between the base film **20** and the sealing layer **30** is a barrier layer **40**. This embodiment is a useful arrangement of materials for high performance packaging films, allowing for optimal positioning of the abuse resistant base film **20** (on the exterior), a protected barrier layer **40** and the sealing layer **30** (allowing for sealing as the exterior layer of the recyclable film).

The sealing layer of the recyclable film may be part of a multilayer polymeric based film, manufactured in a separate process, and subsequently connected to the base film. Alternatively, a film containing a sealing layer may be extruded and simultaneously attached to the base film in an extrusion coating type operation. Sealing layer containing films may be monolayer or multilayer and may be produced by any known processes. If a sealing layer containing film is used, the sealing layer should be located on the exterior surface of the film, such that the sealing layer is located on the exterior surface of the recyclable film.

Ideally, the sealing layer, however it is incorporated into the recyclable film, has not been oriented and has no embedded stress (i.e. the sealing layer has zero or near zero free shrink). In some embodiments, the sealing layer is in a non-oriented multilayer film. Alternatively, the sealing layer may be oriented, as well as fully or partially annealed.

The sealing layer may contain any type of material that will allow for bonding during a package production operation. Sealing materials should be chosen based on the process to be used for sealing and the material/component that the recyclable film will be sealed to. Typical materials used for heat sealing include linear low density polyethylenes, ionomers and ethylene vinyl acetate copolymers, but may be chosen from a wide variety of known sealing materials.

An exemplary embodiment of the recyclable film incorporating a base film and a multilayer film containing a sealing layer is shown in Figure 4. The recyclable film **10** has a base film **20** connected to a multilayer film **36** that contains a sealing layer **30**. The sealing layer **30** is located on the exterior surface of the recyclable film. The multilayer film **36** also contains a barrier layer **40**. The multilayer film **36** may be connected to the base film **20** by any known means, including the use of a separate adhesive layer (not shown). In a preferred embodiment, the base film **20** is oriented and the multilayer film 36 is non-oriented.

Certain embodiments of the recyclable film include a multilayer sealing layer containing film that incorporates other layers such as barrier layers, bulk layers, mechanical strength layers, pigmented layers, etc. The sealing layer containing film may even include polar layers (i.e. layers containing polar polymers such as polyamide or ethylene vinyl alcohol copolymer) along with polar polymer compatibilizer layers.

The sealing layer of the recyclable film may be designed for other functionality. Sealing layers often contain additives such as slip or antiblock. Sealing layers may also have properties including, but not limited to, antifog, easy tear, opacity, color, anti-scalping, or high barrier, including but not limited to oxygen or moisture barrier. For example, a sealing layer may contain titanium dioxide (TiO₂) to increase opacity and stiffness for flow wrap applications.

The sealing layer may also be designed to provide a peelable seal. As used herein, a "peelable seal" is one that can be separated manually (i.e. by hand, without the use of a tool). Seal strength may be tested using ASTM F88 and a peelable seal may result in a force of between 200 and 2,500 g/in. Often, peelable seals are used for consumer convenience. In the case of a recyclable film used as a packaging component, peelable seals may be highly desired such that the recyclable film may be easily separated from the remainder of the packaging components, facilitating easy recycling. In some cases, the other packaging components that may be present may be recycled in the same stream, may be recycled in a different stream, may be designed for disposal (waste stream) or may be designed for reuse without recycling.

In some embodiments, the recyclable film may incorporate a first and second sealing layer. In these situations, the recyclable film has a base film with optional printed indicia and adhesive on either or both exterior surfaces of the base film. There is a first sealing layer and a second sealing layer, positioned as the exterior layers of the recyclable film. In this manner, the recyclable film can be sealed on both sides, allowing for lap sealing (sealing one side of the film to the other side) or attachment of packaging components (such as fitments) to both sides of the recyclable film.

The recyclable film may also include a barrier material for decreasing the transmission rate of gases or other vapors through the film structure. Many high-performance packaging structures include barrier materials such as EVOH, foil, metalized films, PVdC, polyamide or oxide coated films to achieve the low transmission rates required for extending the shelf life of the product packaged. Many packaged foods and pharmaceuticals (as well as other products) are sensitive to their environment and require a very limited transmission rate through the packaging components. Typically, the barrier materials or barrier layers are tuned to low transmission of oxygen or moisture. A barrier material or barrier layer may be incorporated into the recyclable film in any location.

There may be a barrier layer located within the base film of the recyclable film. A non-limiting example is a base film with a layer containing EVOH. EVOH has excellent oxygen barrier, which is enhanced upon orientation. EVOH in the base film could provide an improved effect of good barrier, good heat resistance, good thermal stability, printability and good appearance. The layer containing EVOH may be of a thickness that is at less than about 5% of the total recyclable film thickness such that it does not disrupt the recycling process. Alternatively, if EVOH is included in the base film, a compatibilizer specifically for EVOH may be included as well.

In some embodiments, there may be a barrier layer within a multilayer sealing layer containing film of the recyclable film. Traditional non-recyclable high-performance packaging materials often use extrudable barrier materials such as EVOH or polyamide in multilayer films. This type of sealing layer containing film structure could be incorporated into recyclable films as well, as long as there is enough compatibilizer in the recyclable film to allow for recycling of the film in a polyolefin recycling stream without the need for additional compatibilizer. Typically, if a polar polymer barrier material such as EVOH is incorporated in the sealing layer containing film, a compatibilizer should be incorporated into the film as well.

In some embodiments of the recyclable film, there may be a barrier layer located between the base film and the sealing layer. The oriented base film provides an excellent opportunity to apply barrier coatings, as it has the proper heat resistance, low shrink and thermal stability to withstand the processes necessary for applying the barrier. For example, the oriented and annealed base film could go through a metalization process that would deposit a thin layer of aluminum to a surface of the base film (ex. metal applied to the third layer of the base film). In some embodiments, the exterior layer of the base film may have printed indicia applied followed by a barrier coating. Alternatively, the exterior layer of the base film could have a barrier layer applied first, followed by an optional printed indicia application and finally the sealing layer. Barrier coatings may be any known chemistry, such as crosslinked acrylates or partially neutralized acrylic polymers. Thin layers of depositions or coatings may be useful barrier options for the recyclable films as the amount of material used can usually be incorporated into the recycling stream without the need for compatibilizers.

As indicated previously, the recyclable film can incorporate printed indicia. The indicia may be incorporated in the recyclable film by any known process. High performance packaging is typically converted in high speed processes such as rotogravure printing, flexographic printing, or digital printing. For many applications, the printed indicia that is applied to the film is registered with tight repeat tolerances (i.e. each impression of print must be nearly identical in size). The thermal stability of the oriented and annealed base films described herein is useful for these types of printing processes. The base film can have high quality printing applied to either or both exterior layers. The printed indicia may be located between the base film and the sealing layer, protecting the indicia from external abuse such as scuffing.

The base film may have a primer applied or another treatment (i.e. corona treatment) prior to printing to facilitate good ink wetting and adhesion. Printed indicia applied to the exterior layer of the base film that is the exterior layer of the recyclable film (opposite the side the sealing layer is attached to) may also include a protecting layer or another layer to create a visual or tactile effect. The printed indicia may be incorporated as a continuous layer or applied as a pattern or vignette (an image created by dots). The printed indicia may be continuous with the recyclable film or only cover a small portion of the film. The printed indicia may be visible from either or both sides of the recyclable film.

While the purpose of the proposed recyclable film is to create a structure that can be used in high performance packaging applications, the film may also contain materials that have been recycled. Recycled materials such as previously used packaging (post-consumer recyclate) or film converting trim waste (post-industrial recyclate) may be incorporated into any portion of the recyclable film. The material may not require compatibilizer, it may be pre-compatibilized or a compatibilizer may be added at the point of incorporation.

The base film, sealing layer or any other portion of the recyclable film may incorporate any other additives known to be used in packaging films. These additives may include, but are not restricted to, nucleating agents, processing aids, pigments, slip, or antiblock. Additives may also be "active" in nature, with the intended purpose of interacting with the environment. One example of an active additive is an oxygen absorber.

The recyclable film may have any overall thickness as necessary for the application in which it will be employed. Recyclable films for packaging applications may have a thickness from 1 mil (25.4 micron) to 20 mil (508 micron). The thickness of the recyclable film may be from 1.5 mil (38.1 micron) to 10 mil (254 micron), or from 2 mil (51.7 micron) to 5 mil (127 micron).

The stiffness of the base film and the recyclable film is an important attribute of the recyclable films described herein. The oriented base film provides for improved stiffness over previously available recyclable packaging webs due to the incorporation of polyester layers. Some embodiments that incorporate a base film that has two polyester layers separated by a polyester compatibilizer layer exhibit especially good stiffness characteristics. The stiffness of the base films described herein may mimic, or in some cases improve, the stiffness found in current non-recyclable packaging structures that incorporate OPET or BON. The stiffness of the recyclable film may be critical to successful converting of the film on packaging equipment used today. Adoption of the recyclable films described herein into current packaging applications can be made without higher costs or process inefficiencies. Additionally, the stiffness of a film used as packaging can provide a perception of higher quality and is valued by consumers. Stiffness of the recyclable film or the base film can be measured by a loop stiffness test.

Due to the incorporation of polyester layers and orienting the base film, the recyclable films described herein have heat resistance that allows them to be used as high-performance packaging films. The base film is configured to withstand high temperatures that the packaging film may encounter, such as, but not limited to, heat from film converting, high temperature heat seal units, high temperature processing such as hot fill or retort, or high temperature consumer use such as microwaving. Heat resistance is evident by low shrink, among other properties. When experiencing a high heat environment, the recyclable film should not shrink or otherwise distort. For example, the heat seal areas on a high-performance package should be smooth and clean, without marring or any indication of shrinking or puckering.

The recyclable films disclosed herein are superior to previously developed recyclable films that contain only polyolefin materials. Films that utilize only polyolefin materials are prone to scuffing and durability issues. Films that utilize unoriented polyester materials have increased heat resistance and durability, but still may fall short of the performance of currently available non-recyclable films. However, the recyclable films described herein have heat resistance and durability that mimics non-recyclable films that have BON or OPET exterior layers. The embodiments that employ oriented and annealed base films with exterior layers of polyester materials are especially advantageous for achieving recyclable films that can be used high performance packaging that can be converted and distributed while retaining very good appearance.

The material selection and processing conditions disclosed herein assist in achieving a low shrink, heat resistant material. Using polyester in the base film, in combination with orientation and annealing at the proper conditions, creates a film that exhibits low shrink and good thermal stability at conditions of interest. An analytical approach to testing a materials suitability for high performance packaging applications is a free shrink test. "Free shrink" is defined to be values obtained by measuring unrestrained shrink at 90°C for five seconds. To measure free shrink, five test specimens are cut to 10 cm in the machine direction by 10 cm. in the transverse direction. Each specimen is completely immersed for at least 5 seconds in a 90°C water bath. The distance between the ends of the shrunken specimen is measured. The difference in the measured distance for the shrunken specimen and the original 10 cm. is multiplied by ten to obtain the percent of shrinkage for the specimen for each direction. The machine direction shrinkage for the five specimens is averaged for the machine direction shrinkage value of the given film sample, and the transverse direction shrinkage for the five specimens is averaged for the transverse direction shrinkage value.

The base film may have a machine direction shrink rate of 10% or less than 10% upon application of heat less than or equal to 90°C; or less than 9%, less than 8%, less than 7%, less than 6%, less than 5%, less than 4%, less than 3%, less than 2%, or less than 1%. The base film may have a transverse direction shrink rate of 10% or less than 10% upon application of heat less than or equal to 90°C; or less than 9%, less than 8%, less than 7%, less than 6%, less than 5%, less than 4%, less than 3%, less than 2%, or less than 1%. Preferably, the base film has a machine direction shrink rate of less than 7% and a transverse direction shrink rate of less than 1%, when exposed to heat less than or equal to 90°C. Preferably, the base film has a machine direction shrink rate of less than 5% and a transverse direction shrink rate of less than 5%, when exposed to heat less than or equal to 90°C. The base film may have a shrink rate of less than 2% in the machine direction and 0% in the transverse direction when exposed to heat of 90°C. The base film may have a shrink rate of less than 1% in the machine direction and 0% in the transverse direction when exposed to heat of 90°C.

Similarly, the recyclable film may have a machine direction shrink rate of 10% or less than 10% upon application of heat less than or equal to 90°C; or less than 9%, less than 8%, less than 7%, less than 6%, less than 5%, less than 4%, less than 3%, less than 2%, or less than 1°%. The recyclable film may have a transverse direction shrink rate of 10% or less than 10% upon application of heat less than or equal to 90°C; or less than 9%, less than 8%, less than 7%, less than 6%, less than 5%, less than 4%, less than 3%, less than 2%, or less than 1%. Preferably, the recyclable film has a machine direction shrink rate of less than 7% and a transverse direction shrink rate of less than 1%, when exposed to heat less than or equal to 90°C. Preferably, the recyclable film has a machine direction shrink rate of less than 5% and a transverse direction shrink rate of less than 5%, when exposed to heat less than or equal to 90°C. The recyclable film may have a shrink rate of less than 2% in the machine direction and 0% in the transverse direction when exposed to heat of 90°C. The recyclable film may have a shrink rate of less than 1% in the machine direction and 0% in the transverse direction when exposed to heat of 90°C.

As has been discussed, the recyclable film may contain a barrier layer or barrier material. The recyclable film may exhibit high oxygen or moisture barrier as may be required by packaging applications. Barrier layers may also protect more exterior films/layers from migration from package contents (for example, oils and the like). The recyclable film may have oxygen transmission levels of less than 1,000 cm³ / m² / 24 hours when tested at 0% RH and 23°C following ASTM F1927. The recyclable film may have oxygen transmission levels less than 100, less than 10, less than 5, or less than 1 cm³ / m² / 24 hours. The recyclable film may have moisture transmission levels of less than 100 g / m² / 24 hours when tested at 90%RH and 23°C following ASTM F1249. The recyclable film may have moisture transmission levels of less than 10, less than 5, or less than 1 g / m² / 24 hours.

The recyclable films described herein may have near 100% barrier to visible light (opaque to light), or at least 50% barrier to visible light. This type of recyclable film would be appropriate for packaging applications where a view of the product was not necessary or desirable or when light is detrimental to the shelf life of the product.

Alternatively, the recyclable film may have high light transmission and clarity, as is often desirable for packaging applications when it is desirable to view the product through the packaging material. The base film may have a clarity of more than 80%, 85% or 90%. Ideally, the base film should have a clarity of at least 95%, at least 95.5%, at least 96%, at least 96.5%, at least 97%, at least 97.5%, at least 98%, at least 98.5%, at least 99%, at least 99.5%, or 100%, and all values there between, when measured in accordance with the instructions and teachings of ASTM D-1003. Clarity is defined as the percentage of transmitted light that deviates from the incident light by less than 2.5 degrees. The clarity of the base film can be affected by material selection and orientation conditions, as is known in the art.

As has been discussed, the appearance of the packaging material is critical performance criteria for many high-performance packaging applications. In addition to high clarity and high-quality printed indicia, it is often desirable to have a high gloss exterior. The base film may have gloss levels greater than 50, 60, 70 or even 80 (45° gloss, units, ASTM D2457) which is comparable to other packaging materials such as BON. This type of gloss is superior to recyclable packaging films containing only polyethylene-based materials.

When used as a packaging film, the recyclable film may be sealed to itself, or a similar film, or to one or more other packaging components. Other packaging components may include, but are not limited to zippers, fitments, cups or trays. The packaging may also include other components such as patches, liners, sleeves or labels. The package may be formed from one, two, three or more different packaging components.

The recyclable film may be sealed, or otherwise connected, to itself or additional packaging components to create a hermetically sealed package. The seals may be made by adhesives, heat sealing, ultrasonic sealing, cold sealing, RF welding or any other known bonding method. Hermetic packaging is critical for a wide variety of products, including foods, beverages, pharmaceuticals, consumer goods and other sensitive products. Hermetic packaging can help prevent damage to the product. For many products, achieving good heat seals to create consistently hermetic packages is highly critical. An advantage of the recyclable films disclosed herein is that they are more heat resistant and thus can be formed into hermetic packaging on a more reliable basis. The combination of the high heat resistance of the base film and the sealing layer layers that provide quality seals is an important advantage to the recyclable films presented herein.

It is also an advantage of some embodiments of the recyclable films disclosed herein that they are provided with sealing layers that achieve peelable seals when heat sealed to other packaging components. Packages can be opened by consumers in many ways, including peeling open manually. Peelable seals are those that can be peeled open by a consumer by hand, without the use of another tool. A consumer can grasp two parts of a package and pull the package open at a heat seal. Peelable seals allow for the product within the package to be easily accessed by the consumer. In some cases, peelable seals can also be manually reclosed and resealed. Additionally, the recyclable films may have peelable heat seals to allow for easy separation of the packaging components. This advantageously allows for proper disposal of the packaging components into other recycling streams or waste streams. The packaging components included in the hermetically sealed package may be recyclable in the same stream as the recyclable film, recyclable in a different stream or not recyclable at all.

The recyclable film may be used in any sort of hermetic package format including, but not limited to, pouches, bags, flow wrap, tray/lid, chub, bulk bag, and blisters. The recyclable film may be used to package any type of product including, but not limited to, dry foods, liquids, meats, cheese, fresh foods, frozen foods, beverages, pharmaceuticals, nutraceuticals, cosmetics, hard-to-hold products, cleaners, chemicals, wipes, medical products, electronic devices, pet foods/treats, bulk products, etc.

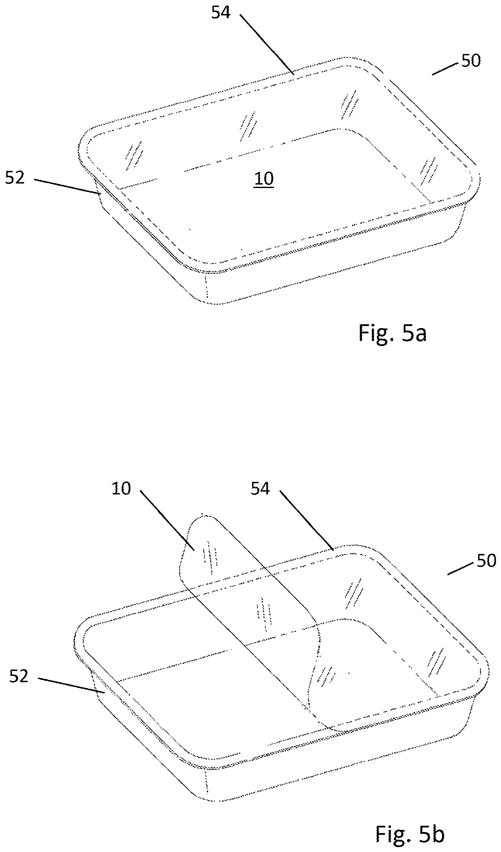

In some embodiments, the recyclable film is in the form of a lid that is attached to a tray or cup. The tray or cup may be flexible, semi-rigid or rigid and can be made of any material including, but not limited to, polyester, polyethylene, polystyrene, polypropylene, paper, metal, glass or ceramic. This embodiment is shown in Figures 5a and 5b. The package **50** has a lid comprising the recyclable film **10** connected to a tray **52** by a heat seal **54**. Figure 5a is a hermetically sealed package **50**, while Figure 5b shows the package **50** after the lid **10** has been manually peeled away from the tray **52**. The lid **10**, the tray **52** or both the lid and the tray may be a recyclable film.

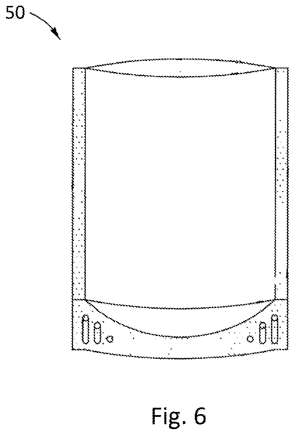

Some embodiments of packages that use the recyclable films disclosed herein are in the format of a pouch, bag or sachet. In this format, the recyclable film is used as at least one of the sidewalls of the package, or in some cases, all the side walls. An embodiment of a package that incorporates a recyclable film for the entire package is shown as the stand-up pouch package **50** in Figure 6. A pouch or bag may be sealed in a fin seal or lap seal configuration. A sachet may have side seals and end seals. Fitments or other closures may be sealed to any part of the recyclable film.

As previously described, a package containing the recyclable film will contain a product. Ideally, the package is configured such that after the product has been removed from the package, the package may be opened fully, and the packaging components separated as necessary, for optimal emptying (complete product removal), rinsing, and recycling. Compete product removal means that the package is free from significant amounts of product that would contaminate the recycling process. Complete product removal may be determined by visual inspection. Complete product removal may be accomplished by rinsing the opened packaging components with water until most or all the product has been removed.

The separation of the packaging components may be facilitated by the previously mentioned peelable seals, or by any other means such as weakened lines or perforations that can be torn open. In some cases, the recyclable film and the other packaging components are designed to be easily torn or cut to facilitate opening. In some embodiments, packaging components remain attached to the recyclable film and are capable of being recycled in the same recycling stream.

Some embodiments of the recyclable film may be used in chub style packaging. These films may have sealing layers on both major surfaces of the recyclable film to accommodate lap sealing. The recyclable film may have a very slight amount of machine direction and/or transverse direction shrink, such as 5%, as is optimal for some chub style packaging applications.

The size of the package in which the recyclable film is used is unlimited. The packaging could be very small (a few square inches) or very large, as is the case for bulk container liners. A bulk liner may be made from a recyclable film and in some embodiments, a bulk liner may be made from several plies of recyclable film. The bulk liners may have fitments attached to either surface.

The recyclable films described herein may also be used for applications that are not related to packaging.

Unless defined otherwise, all technical and scientific terms used herein have the same meanings as commonly understood by one of ordinary skill in the art to which this invention belongs. All publications and patents specifically mentioned herein are incorporated by reference for all purposes.

The following examples are offered for illustrative purposes only and is not intended to limit the scope of the present invention in any way. Indeed, various modifications of the invention in addition to those shown and described herein will become apparent to those skilled in the art from the foregoing description and the following examples and fall within the scope of the appended claims.

### Examples & Data

Recycling of common laminates of 48 ga OPET / 2 mil polyethylene sealant and 48 ga OPET / 3 mil polyethylene sealant was simulated by cast extrusion of a resin blend of APET (polyester) and HDPE using blend ratios of 1:3 and 1:4.5, respectively. Due to the incompatibility of these materials, the resulting extrudate had very heavy phase separation, and a continuous film was not achievable (see Reference in Table 1).

The above process was modified by the addition of different polyester compatibilier candidates at various loading levels, as shown in Table 1. Film extrusion behavior and processing conditions were recorded and appear in Table 1. A Control film of all HDPE was also run through the extrusion process.

**Table 1**

| Sample ID | Compatibilizer | Weight Ratio APET: HDPE: Compatibilizer | Extrusion Observation | Extrusion Back Pressure (bar) |
|---|---|---|---|---|
| Control | None | HDPE only | Uniform film | 129 |
| Reference | None | 1:3:0 | Heavy phase separation, non-continuous film | 230 |
| B | Elvaloy^{™} PTW Copolymer | 1:3:1 | Phase separation; non-continuous film | 176 |
| C1 | Sukano^{®} TA52-10 MB02 | 1:3:1.3 | Phase separation; film not uniform | 174 |
| C2 | Sukano^{®} TA52-10 MB02 | 1:4.5:1 | Uniform film | 130 |
| C3 | Sukano^{®} TA52-10 MB02 | 1:4.5:0.5 | Uniform film | 142 |
| C4 | Sukano^{®} TA52-10 MB02 | 1:4.5:0.25 | Uniform film | 157 |
| D1 | Nucrel^{®} 0903HC | 1:3:1 | Uniform film | 140 |
| D2 | Nucrel^{®} 0903HC | 1:3:0.5 | Uniform film | 152 |
| D3 | Nucrel^{®} 0903HC | 1:3:0.25 | Uniform film | 175 |
| E1 | Elvaloy^{™} AC 1820 | 1:3:1 | Uniform film | 150 |
| E2 | Elvaloy^{™} AC 1820 | 1:3:0.5 | Uniform film | 157 |
| E3 | Elvaloy^{™} AC 1820 | 1:3:0.25 | Uniform film | 168 |
| F1 | Surlyn^{™} 1652 | 1:3:1 | Uniform film | 112 |
| F2 | Surlyn^{™} 1652 | 1:3:0.5 | Uniform film | 138 |
| F3 | Surlyn^{™} 1652 | 1:3:0.25 | Uniform film | 152 |
| F4 | Surlyn^{™} 1652 | 1:3:0.125 | Uniform film | 159 |
| G1 | Surlyn^{™} 1702 | 1:3:1 | Uniform film | 106 |
| G2 | Surlyn^{™} 1702 | 1:3:0.5 | Uniform film | 120 |
| G3 | Surlyn^{™} 1702 | 1:3:0.25 | Uniform film | 140 |

Of the samples that were tested, the Elvaloy^{™} PTW Copolymer (Sample B) was determined to be an unsuitable compatibilizer for the APET/HDPE system, since a continuous film could not be produced. Additionally, the Sukano^{®} TA52-10 MB02 was found to be unsuitable in systems that had high APET content (Sample C1). The remainder of the compatibilizer blends tested produced a uniform film. However, another good indicator of compatibilizer activity is the back pressure of the extrusion process. A good compatibilizer will allow incorporation of the APET into the polyethylene with little to no effect on the processing. In other words, a good compatibilizer will result in a back pressure that is close to the back pressure experienced on the control sample, 129 bar. Accordingly, the samples that exhibited non-uniform film formation from poor compatibilization had high back pressure (Samples B and Cl). Additionally, Samples D3 and E3, while compatibilizing enough to form uniform film, had higher back pressure, indicating less than adequate compatibilizing activity.

The samples were then subjected to standard tensile testing, and machine direction elongation and tensile strength are recorded in Table 2. For this testing, 1-inch width strips were cut out of the middle of the film samples in the machine direction. Strips were clamped into the tensile testing apparatus at a distance of 2 inches and the strips were stretched at 5 inches/minute.

**Table 2**

| Sample ID | Elongation (%) | Tensile strength at break (Ibf) | Tensile Testing Observations |
|---|---|---|---|
| C2 | 810 | 33.6 | Stretched evenly |
| C3 | 735 | 29.7 | Stretched evenly |
| C4 | 755 | 33.2 | Stretched evenly |
| D1 | 410 | 24.1 | Developed holes |
| D2 | 520 | 36.7 | Stretched evenly |
| D3 | 310 | 16.4 | Developed holes |
| E1 | 545 | 31.3 | Stretched evenly |
| E2 | 490 | 27.9 | Stretched evenly |
| E3 | 385 | 25.4 | Developed holes |
| F1 | 485 | 31.8 | Developed holes |
| F2 | 495 | 35.5 | Stretched evenly |
| F3 | 555 | 33.9 | Stretched evenly |
| F4 | 480 | 32.3 | Stretched evenly |
| G1 | 160 | 8.0 | Transverse direction tear |
| G2 | 430 | 16.2 | Developed holes |
| G3 | 450 | 30.7 | Developed holes |

As shown in Table 2, PET-PE coextrusion film with selected compatibilizer candidates, including DuPont 1652 Ionomer and 1820 EMA, shows excellent material distribution and compatibilizing mixing during melt. Final film with good compatibilizer has no obvious macroscale phase separation; moreover, under high tension, sample films behave as mono-PE film in terms of elongation percentage, force at break, etc.

## Claims

1. A recyclable film, which is recyclable into a polyethylene-based stream or a polypropylene based stream, comprising:
a) a base film comprising:
i) a first layer comprising a polyester, and
ii) a second layer comprising a polyester compatibilizer, and
b) a sealing layer connected to the base film and located on an exterior surface of the recyclable film,
wherein the base film is oriented, and the sealing layer is not oriented, and
wherein the base film has a free shrink value of less than 10% in both the machine direction and the transverse direction when tested according to ASTM D2732 using bath temperature of 90C,
wherein a mass ratio of the polyester compatibilizer to the polyester is from 1:6 to 1:1.

2. The recyclable film according to claim 1 wherein the polyester compatibilizer is a polyolefin polymer.

3. The recyclable film according to claim 1 wherein the polyester is one selected from the group of polyethylene terephthalate (PET), polyethylene terephthalate glycol (PETG), polybutylene terephthalate (PBT), polyethylene naphthalate (PEN), polyethylene isophthalate (PEI), polycycloterephthalate (PCT), and polytriethylene terephthalate (PTT).

4. The recyclable film according to claim 1 wherein the polyester compatibilizer is one selected from the group of ethylene methyl acrylate copolymer (EMA), ethylene methacrylic acid copolymer (EMAA), ethylene acrylic acid copolymer (EAA), ethylene butyl acrylate copolymer (EBA), ethylene glycidyl methacrylate copolymer (E/GMA), EMAA partially neutralized by a metal salt and EMA partially neutralized by a metal salt.

5. The recyclable film according to claim 1 wherein the first layer of the base film is an exterior layer of the base film.

6. A recyclable film, which is recyclable into a polyethylene-based stream or a polypropylene based stream, comprising:
a) a base film comprising:
i) a first layer comprising a polyester,
ii) a second layer comprising a polyester compatibilizer, and
iii) a third layer comprising a polyester,
wherein the second layer is located between the first layer and the third layer, and
b) a sealing layer connected to the base film, and
wherein the base film is oriented and has a free shrink value of less than 10% in both the machine direction and the transverse direction when tested according to ASTM D2732 using bath temperature of 90C,
wherein a mass ratio of the polyester compatibilizer to the polyester is from 1:6 to 1:1.

7. The recyclable film according to claim 6 wherein the first layer is a first exterior layer of the base film and the third layer is a second exterior layer of the base film and wherein the recyclable film further comprises printed indicia located on the second exterior layer of the base film.

8. The recyclable film according to claim 6 wherein the base film forms a first exterior surface of the recyclable film and the sealing layer forms a second exterior surface of the recyclable film.

9. The recyclable film according to claim 6 wherein the sealing layer is comprised in a non-oriented multilayer film that also comprises a barrier layer comprising an ethylene vinyl alcohol copolymer.

10. A recyclable film, which is recyclable into a polyethylene-based stream or a polypropylene based stream, comprising a base film comprising:
i) a first layer comprising a polyester,
ii) a second layer comprising a polyester compatibilizer, and
iii) a third layer comprising a polyester,
wherein the base film is oriented and the second layer is located between the first layer and the third layer,
wherein a mass ratio of the polyester compatibilizer to the polyester is from 1:6 to 1:1.

11. The recyclable film according to claim 10 further comprising a sealing layer located on an exterior surface of the recyclable film.

12. The recyclable film according to claim 11 further comprising a barrier material located between the base film and the sealing layer.

13. The recyclable film according to claim 10 wherein the base film further comprises a bonding agent layer.

14. A package comprising the recyclable film according to any of the previous claims and optionally an additional packaging component.

## Patentansprüche

1. Recycelbare Folie, die in einen Strom auf Polyethylenbasis oder einen Strom auf Polypropylenbasis recycelbar ist, umfassend:
a) eine Basisfolie, umfassend:
i) eine erste Schicht, die einen Polyester umfasst, und
ii) eine zweite Schicht, die einen Polyesterkompatibilisator umfasst, und
b) eine Siegelschicht, die mit der Basisfolie verbunden ist und auf einer Außenfläche der recycelbaren Folie angeordnet ist,
wobei die Basisfolie ausgerichtet ist und die Siegelschicht nicht ausgerichtet ist, und
wobei die Basisfolie einen freien Schrumpfwert von weniger als 10 % sowohl in der Maschinenrichtung als auch in der Querrichtung aufweist, wenn sie gemäß ASTM D2732 unter Verwendung einer Badtemperatur von 90 °C getestet wird,
wobei das Massenverhältnis des Polyesterkompatibilisators zu dem Polyester 1:6 bis 1:1 beträgt.

2. Recycelbare Folie nach Anspruch 1, wobei der Polyesterkompatibilisator ein Polyolefinpolymer ist.

3. Recycelbare Folie nach Anspruch 1, wobei der Polyester ausgewählt ist aus der Gruppe von Polyethylenterephthalat (PET), Polyethylenterephthalatglycol (PETG), Polybutylenterephthalat (PBT), Polyethylennaphthalat (PEN), Polyethylenisophthalat (PEI), Polycycloterephthalat (PCT) und Polycycloteterphthalat (PTT).

4. Recycelbare Folie nach Anspruch 1, wobei der Polyesterkompatibilisator ausgewählt ist aus der Gruppe von Ethylen-Methylacrylat-Copolymer (EMA), Ethylen-Methacrylsäure-Copolymer (EMAA), Ethylen-Acrylsäure-Copolymer (EAA), Ethylen-Butylacrylat-Copolymer (EBA), Ethylen-Glycidylmethacrylat-Copolymer (E/GMA), durch ein Metallsalz teilweise neutralisiertes EMAA und durch ein Metallsalz teilweise neutralisiertes EMA.

5. Recycelbare Folie nach Anspruch 1, wobei die erste Schicht der Basisfolie eine Außenschicht der Basisfolie ist.

6. Recycelbare Folie, die in einen Strom auf Polyethylenbasis oder einen Strom auf Polypropylenbasis recycelbar ist, umfassend:
a) eine Basisfolie, umfassend:
i) eine erste Schicht, die einen Polyester umfasst,
ii) eine zweite Schicht, die einen Polyesterkompatibilisator umfasst, und
iii) eine dritte Schicht, die einen Polyester umfasst,
wobei die zweite Schicht zwischen der ersten Schicht und der dritten Schicht angeordnet ist, und
b) eine Siegelschicht, die mit der Basisfolie verbunden ist, und
wobei die Basisfolie ausgerichtet ist und einen freien Schrumpfwert von weniger als 10 % sowohl in der Maschinenrichtung als auch in der Querrichtung aufweist, wenn sie gemäß ASTM D2732 unter Verwendung einer Badtemperatur von 90 °C getestet wird,
wobei das Massenverhältnis des Polyesterkompatibilisators zu dem Polyester 1:6 bis 1:1 beträgt.

7. Recycelbare Folie nach Anspruch 6, wobei die erste Schicht eine erste Außenschicht der Basisfolie ist und die dritte Schicht eine zweite Außenschicht der Basisfolie ist und wobei die recycelbare Folie ferner auf der zweiten Außenschicht der Basisfolie angeordnete gedruckte Zeichen umfasst.

8. Recycelbare Folie nach Anspruch 6, wobei die Basisfolie eine erste Außenfläche der recycelbaren Folie bildet und die Siegelschicht eine zweite Außenfläche der recycelbaren Folie bildet.

9. Recycelbare Folie nach Anspruch 6, wobei die Siegelschicht in einer nicht ausgerichteten Mehrschichtfolie enthalten ist, die auch eine Sperrschicht umfassend ein Ethylen-Vinylalkohol-Copolymer umfasst.

10. Recycelbare Folie, die in einen Strom auf Polyethylenbasis oder einen Strom auf Polypropylenbasis recycelbar ist, umfassend eine Basisfolie, umfassend:
i) eine erste Schicht, die einen Polyester umfasst,
ii) eine zweite Schicht, die einen Polyesterkompatibilisator umfasst, und
iii) eine dritte Schicht, die einen Polyester umfasst,
wobei die Basisfolie ausgerichtet ist und die zweite Schicht zwischen der ersten Schicht und der dritten Schicht angeordnet ist,
wobei das Massenverhältnis des Polyesterkompatibilisators zu dem Polyester 1:6 bis 1:1 beträgt.

11. Recycelbare Folie nach Anspruch 10, ferner umfassend eine Siegelschicht, die auf einer Außenfläche der recycelbaren Folie angeordnet ist.

12. Recycelbare Folie nach Anspruch 11, ferner umfassend ein Sperrmaterial, das zwischen der Basisfolie und der Siegelschicht angeordnet ist.

13. Recycelbare Folie nach Anspruch 10, wobei die zweite Schicht ferner eine Bindemittelschicht umfasst.

14. Verpackung, umfassend die recycelbare Folie nach einem der vorhergehenden Ansprüche und optional eine zusätzliche Verpackungskomponente.

## Revendications

1. Film recyclable, qui est recyclable en un flux à base de polyéthylène ou un flux à base de polypropylène, comprenant :
a) un film de base comprenant :
i) une première couche comprenant un polyester et
ii) une deuxième couche comprenant un agent de compatibilité polyester et
b) une couche de scellement reliée au film de base et située sur une surface extérieure du film recyclable,
dans lequel le film de base est orienté, et la couche de scellement n'est pas orientée et
dans lequel le film de base a une valeur de rétrécissement libre inférieure à 10 % à la fois dans le sens machine et dans le sens travers lorsqu'il est mis à l'essai selon la norme ASTM D2732 en utilisant une température de bain de 90 °C,
dans lequel un rapport massique de l'agent de compatibilité polyester pour le polyester est de 1:6 à 1:1.

2. Film recyclable selon la revendication 1, dans lequel l'agent de compatibilité polyester est un polymère de polyoléfine.

3. Film recyclable selon la revendication 1, dans lequel le polyester est un polyester l'un choisi dans le groupe constitué par le polyéthylène téréphtalate (PET), le polyéthylène téréphtalate glycolisé (PETG), le polybutylène téréphtalate (PBT), le polyéthylène naphtalate (PEN), le polyéthylène isophtalate (PEI), le polycyclotéréphtalate (PCT) et le polytriéthylène téréphtalate (PTT).

4. Film recyclable selon la revendication 1, dans lequel l'agent de compatibilité de polyester est l'un choisi dans le groupe constitué par un copolymère éthylène acrylate de méthyl (EMA), un copolymère éthylène acide méthacrylique (EMAA), un copolymère éthylène acide acrylique (EAA), un copolymère éthylène acrylate de butyle (EBA), un copolymère éthylène méthacrylate de glycidyle (E/GMA), un EMAA partiellement neutralisé par un sel métallique et un EMA partiellement neutralisé par un sel métallique.

5. Film recyclable selon la revendication 1, dans lequel la première couche du film de base est une couche extérieure du film de base.

6. Film recyclable, qui est recyclable en un flux à base de polyéthylène ou un flux à base de polypropylène, comprenant :
a) un film de base comprenant :
i) une première couche comprenant un polyester,
ii) une deuxième couche comprenant un agent de compatibilité polyester et
iii) une troisième couche comprenant un polyester,
dans lequel la deuxième couche est située entre la première couche et la troisième couche et
b) une couche de scellement reliée au film de base, et
dans lequel le film de base est orienté et a une valeur de rétrécissement libre inférieure à 10 % à la fois dans le sens machine et dans le sens travers lorsqu'il est mis à l'essai selon la norme ASTM D2732 en utilisant une température de bain de 90 °C, dans lequel un rapport massique de l'agent de compatibilité polyester pour le polyester est de 1:6 à 1:1.

7. Film recyclable selon la revendication 6, dans lequel la première couche est une première couche extérieure du film de base et la troisième couche est une deuxième couche extérieure du film de base et dans lequel le film recyclable comprend en outre des inscriptions imprimées situées sur la deuxième couche extérieure du film de base.

8. Film recyclable selon la revendication 6, dans lequel le film de base forme une première surface extérieure du film recyclable et la couche de scellement forme une deuxième surface extérieure du film recyclable.

9. Film recyclable selon la revendication 6, dans lequel la couche de scellement est comprise dans un film multicouche non orienté qui comprend également une couche barrière comprenant un copolymère éthylène alcool vinylique.

10. Film recyclable, qui est recyclable en un flux à base de polyéthylène ou un flux à base de polypropylène, comprenant un film de base comprenant :
i) une première couche comprenant un polyester,
ii) une deuxième couche comprenant un agent de compatibilité polyester et
iii) une troisième couche comprenant un polyester,
dans lequel le film de base est orienté et la deuxième couche est située entre la première couche et la troisième couche,
dans lequel un rapport massique de l'agent de compatibilité polyester pour le polyester est de 1:6 à 1:1.

11. Film recyclable selon la revendication 10, comprenant en outre une couche de scellement située sur une surface extérieure du film recyclable.

12. Film recyclable selon la revendication 11, comprenant en outre un matériau barrière situé entre le film de base et la couche de scellement.

13. Film recyclable selon la revendication 10, dans lequel le film de base comprend en outre une couche d'agent de liaison.

14. Emballage comprenant le film recyclable selon l'une quelconque des revendications précédentes et facultativement un composant d'emballage supplémentaire.
